# EUROPEAN PATENT APPLICATION

(11) **EP 4 804 612 A1**
(43) Date of publication of application: **09.09.2026**
(21) Application number: 23957173.0
(22) Date of filing: 31.10.2023
(51) Int. Cl.: H04W 36/00

(54) **RESOURCE DETERMINATION METHOD, TERMINAL, NETWORK DEVICE, AND COMMUNICATION SYSTEM**

(71) Applicant: Beijing Xiaomi Mobile Software Co., Ltd., Beijing 100085 (CN)
(72) Inventor: LUO, Xingyi, Beijing 100085 (CN)
(74) Representative: Stöckeler, Ferdinand
(86) International application number: PCT/CN2023/128824
(87) International publication number: WO 2025/091296

(57) **Abstract**

The present disclosure relates to a resource determination method, a terminal, a network device, and a communication system. The method comprises: a terminal receives first information sent by a serving cell, wherein the first information is used for triggering a user to hand over to a target cell and is used for activating a scheduling-free physical uplink shared channel CG PUSCH resource of the target cell, the activated CG PUSCH resource is used by the terminal to send third information to the target cell, and the third information is used for indicating that the terminal confirms handover to the target cell. According to embodiments of the present disclosure, the resource overhead for sending a confirmation message to the target cell during cell handover can be reduced.

## Description

### TECHNICAL FIELD

The disclosure relates to the field of communication technology, and in particular, to a resource determination method, a terminal, a network device, and a communication system.

### BACKGROUND

In L1/L2-triggered mobility (LTM), to reduce switch time overhead, it is considered to measure timing advance (TA) information from a user to each candidate cell in advance to support a random access channel less (RACH-less) cell switch process. During the RACH-less cell switch process, a terminal needs to send specific information to a target cell for accessing the target cell.

### SUMMARY

In supporting a random access channel less (RACH-less) cell switch process, how to reduce resource overhead required for sending specific information to the target cell is a technical problem to be solved. Embodiments of the disclosure provide a resource determination method, a terminal, a network device, and a communication system to solve the above technical problem.

According to a first aspect of embodiments of the disclosure, a resource determination method is provided. The method includes: receiving, by a terminal, first information sent by a serving cell, in which the first information is used to trigger a user to switch to a target cell and used in activating a configured grant physical uplink shared channel (CG PUSCH) resource of the target cell, the CG PUSCH resource activated is used for the terminal to send third information to the target cell, and the third information is used for indicating that the terminal confirms switching to the target cell.

According to a second aspect of embodiments of the disclosure, a resource determination method is provided. The method includes: sending, by a network device, first information, in which the first information is used to trigger a user to switch to a target cell and used in activating a configured grant physical uplink shared channel (CG PUSCH) resource of the target cell, the CG PUSCH resource activated is used for a terminal to send third information to the target cell, and the third information is used for indicating that the terminal confirms switching to the target cell.

According to a third aspect of embodiments of the disclosure, a terminal is provided. The terminal includes a transceiver module configured to receive first information sent by a serving cell, in which the first information is used to trigger a user to switch to a target cell and used in activating a configured grant physical uplink shared channel (CG PUSCH) resource of the target cell, the CG PUSCH resource activated is used for the terminal to send third information to the target cell, and the third information is used for indicating that the terminal confirms switching to the target cell.

According to a fourth aspect of embodiments of the disclosure, a network device is provided. The network device includes a transceiver module configured to send first information. The first information is used for triggering a user to switch to a target cell and used in activating a configured grant physical uplink shared channel (CG PUSCH) resource of the target cell, the CG PUSCH resource activated is used for a terminal to send third information to the target cell, and the third information is used for indicating that the terminal confirms switching to the target cell.

According to a fifth aspect of embodiments of the disclosure, a terminal is provided. The terminal includes one or more processors, in which the one or more processors are configured to perform the method according to the first aspect.

According to a sixth aspect of embodiments of the disclosure, a network device is provided. The network device includes one or more processors, in which the one or more processors are configured to perform the method according to the second aspect.

According to a seventh aspect of embodiments of the disclosure, a communication system is provided. The communication system includes a terminal and a network device. The terminal is configured to implement the method according to the first aspect, and the network device is configured to implement the method according to the second aspect.

According to an eighth aspect of embodiments of the disclosure, a storage medium is provided. The storage medium has instructions stored thereon. When the instructions are executed on a communication device, the communication device is caused to perform the method according to any one of the first aspect or the second aspect.

With the embodiments of the disclosure, resource consumption for sending a confirmation message to a target cell during a cell switch process may be reduced.

### BRIEF DESCRIPTION OF THE DRAWINGS

In order to more clearly illustrate technical solutions in embodiments of the disclosure, the following briefly introduces drawings required for the description of the embodiments. The following drawings are only some embodiments of the disclosure and do not limit the protection scope of the disclosure.
FIG. 1A is an example schematic diagram illustrating an architecture of a communication system according to an embodiment of the disclosure.
FIG. 1B is an example schematic diagram illustrating a RACH-less cell switch procedure according to an embodiment of the disclosure.
FIG. 2A is an example schematic diagram illustrating an interaction of a resource determination method according to an embodiment of the disclosure.
FIG. 2B is an example schematic diagram illustrating an interaction of a resource determination method according to an embodiment of the disclosure.
FIG. 2C is a schematic diagram illustrating a configured grant physical uplink shared channel occasion (CGO) configuration with a configured repetition number in a time domain.
FIG. 2D is a schematic diagram illustrating a configured grant physical uplink shared channel occasion (CGO) configuration with a configured repetition number in a frequency domain.
FIG. 3A is a flowchart illustrating a resource determination method according to an embodiment of the disclosure.
FIG. 3B is a flowchart illustrating a resource determination method according to an embodiment of the disclosure.
FIG. 3C is a flowchart illustrating a resource determination method according to an embodiment of the disclosure.
FIG. 4A is a flowchart illustrating a resource determination method according to an embodiment of the disclosure.
FIG. 4B a flowchart illustrating a resource determination method according to an embodiment of the disclosure.
FIG. 4C a flowchart illustrating a resource determination method according to an embodiment of the disclosure.
FIG. 4D a flowchart illustrating a resource determination method according to an embodiment of the disclosure.
FIG. 5 is a schematic diagram illustrating an interaction of a resource determination method according to an embodiment of the disclosure.
FIG. 6A is a block diagram illustrating a terminal according to an embodiment of the disclosure.
FIG. 6B is a block diagram illustrating a network device according to an embodiment of the disclosure.
FIG. 7A is a block diagram illustrating a communication device 7100 according to an embodiment of the disclosure.
FIG. 7B is a block diagram illustrating a chip 7200 according to an embodiment of the disclosure.

### DETAILED DESCRIPTION

Embodiments of the disclosure provide a resource determination method, a terminal, a network device, and a communication system.

In a first aspect, embodiments of the disclosure provide a resource determination method. The method includes receiving, by a terminal, first information sent by a serving cell. The first information is used for triggering a user to switch to a target cell and used in activating a configured grant physical uplink shared channel (CG PUSCH) resource of the target cell. The CG PUSCH resource activated is used for the terminal to send third information to the target cell, and the third information is used for indicating that the terminal confirms switching to the target cell.

In the above embodiment, triggering the user to switch to the target cell and activating the CG PUSCH resource through the first information may reduce the terminal's occupation rate of target cell resources and resource overhead.

In combination with some embodiments of the first aspect, in some embodiments, the terminal receives second information sent by the serving cell. The second information is used for configuring CG PUSCH resource information for a plurality of candidate cells. The target cell is selected, based on beam measurement results of the plurality of candidate cells, by the serving cell as a cell for a switch process.

In the above embodiment, configuring the CG PUSCH resource information for the candidate cells through the second information may optimize the cell switch process and improve communication quality.

In combination with some embodiments of the first aspect, in some embodiments, the second information includes at least one of: a CG PUSCH time-frequency resource configuration of a candidate cell; a CG PUSCH period; or a time-domain offset.

In combination with some embodiments of the first aspect, in some embodiments, the first information at least includes target cell information and indication information for indicating whether to activate the CG PUSCH resource of the target cell.

In combination with some embodiments of the first aspect, in some embodiments, the second information includes a period and a time-domain offset of a CG PUSCH resource.

In combination with some embodiments of the first aspect, in some embodiments, the first information at least includes: target cell information; indication information for indicating whether to activate the CG PUSCH resource of the target cell; and information of a CG PUSCH time-frequency resource configuration.

In the above embodiment, information of the target cell to be switched to and the indication information for activating the CG PUSCH resource are determined through the first information, such that the CG PUSCH resource of the target cell may be activated upon switching to the target cell, thereby reducing resource overhead.

In combination with some embodiments of the first aspect, in some embodiments, the CG PUSCH time-frequency resource configuration includes a first repetition number and a second repetition number, the first repetition number indicates a number of repetitions of a CGO in a time domain, and the second repetition number indicates a number of repetitions of a CGO in a frequency domain.

In combination with some embodiments of the first aspect, in some embodiments, the CG PUSCH time-frequency resource configuration includes time-frequency resource block information and the number of CGOs, the time-frequency resource block information includes time-domain resource block information and frequency-domain resource block information, the number of CGOs includes a first number and a second number, the time-domain resource block information is used for indicating a total time-domain resource occupied by the first number of CGOs within a first time-domain resource range, and the frequency-domain resource block information is used for indicating a total frequency-domain resource occupied by the second number of CGOs within a first frequency-domain resource range.

In the above embodiment, the CG PUSCH resource of the target cell may be determined for sending a confirmation message to the target cell to access the target cell and complete the switch.

In combination with some embodiments of the first aspect, in some embodiments, the CG PUSCH time-frequency resource configuration is carried in pre-configuration information of the plurality of candidate cells, the pre-configuration information includes a plurality of instances of CG PUSCH configuration information, each of the plurality of instances of CG PUSCH configuration information includes a respective time-frequency resource configuration.

In the above embodiment, with the pre-configuration information, the terminal may obtain the instances of CG PUSCH configuration information of the plurality of candidate cells to optimize the cell switch process.

In combination with some embodiments of the first aspect, in some embodiments, CGOs corresponding to the CG PUSCH resource have a correspondence with synchronization signal block (SSB) indexes, and the correspondence satisfies that one CGO corresponds to a plurality of SSB indexes.

In the above embodiment, the mapping relationship between CGOs and SSB indexes is defined.

In combination with some embodiments of the first aspect, in some embodiments, the correspondence is configured in the following manner: the number of SSB indexes configured per CGO is greater than 1; configuring SSB indexes based on DMRS groups; or indicating the number of SSB indexes by third information.

In the above embodiment, by configuring the mapping relationship between CGOs and SSB indexes, resource overhead may be reduced when the user uses the CGO resource to send confirmation information.

In combination with some embodiments of the first aspect, in some embodiments, the first information is a cell switch command sent by the serving cell to the terminal.

In the above embodiment, fourth information sent by the target cell is received, and the fourth information is used for deactivating the CG PUSCH resource activated.

In the above embodiment, after switching to the target cell, the target cell deactivates the CG PUSCH resource activated, which helps improve resource availability and ensures that resources are not idly wasted.

In a second aspect, embodiments of the disclosure provide a resource determination method. The method includes sending first information to a terminal. The first information is used for triggering a user to switch to a target cell and used in activating a configured grant physical uplink shared channel (CG PUSCH) resource of the target cell. The CG PUSCH resource activated is used for the terminal to send third information to the target cell, and the third information is used for indicating that the terminal confirms switching to the target cell.

In the above embodiment, the user is triggered to switch to the target cell and the CG PUSCH resource of the target cell is activated, based on the first information. With the method in the above embodiment, resource utilization may be improved, and resource overhead during the cell switch process may be reduced.

In combination with some embodiments of the second aspect, in some embodiments, the method further includes: sending second information. The second information is used for configuring CG PUSCH resource information for a plurality of candidate cells. The target cell is selected, based on beam measurement results of the plurality of candidate cells, by a serving cell as a cell for a switch process.

In combination with some embodiments of the second aspect, in some embodiments, the second information includes at least one of: a CG PUSCH time-frequency resource configuration of a candidate cell; a CG PUSCH period; or a time-domain offset.

In combination with some embodiments of the second aspect, in some embodiments, the first information at least includes target cell information and indication information for indicating whether to activate the CG PUSCH resource of the target cell.

In combination with some embodiments of the second aspect, in some embodiments, the second information includes a period and a time-domain offset of a CG PUSCH resource.

In combination with some embodiments of the second aspect, in some embodiments, the first information at least includes: target cell information; indication information for indicating whether to activate the CG PUSCH resource of the target cell; and information of a CG PUSCH time-frequency resource configuration.

In combination with some embodiments of the second aspect, in some embodiments, the CG PUSCH time-frequency resource configuration includes a first repetition number and a second repetition number, the first repetition number indicates the number of repetitions of a CGO in a time domain, and the second repetition number indicates the number of repetitions of a CGO in a frequency domain.

In combination with some embodiments of the second aspect, in some embodiments, the CG PUSCH time-frequency resource configuration includes time-frequency resource block information and the number of CGOs, the time-frequency resource block information includes time-domain resource block information and frequency-domain resource block information, the number of CGOs includes a first number and a second number, the time-domain resource block information is used for indicating a total time-domain resource occupied by the first number of CGOs within a first time-domain resource range, and the frequency-domain resource block information is used for indicating a total frequency-domain resource occupied by the second number of CGOs within a first frequency-domain resource range.

In combination with some embodiments of the second aspect, in some embodiments, the CG PUSCH time-frequency resource configuration is carried in pre-configuration information of the plurality of candidate cell, the pre-configuration information includes a plurality of instances of CG PUSCH configuration information, each of the plurality of instances of CG PUSCH configuration information includes a respective time-frequency resource configuration.

In combination with some embodiments of the second aspect, in some embodiments, CGOs corresponding to the CG PUSCH resource have a correspondence with synchronization signal block (SSB) indexes, and the correspondence satisfies that one CGO corresponds to a plurality of SSB indexes.

In combination with some embodiments of the second aspect, in some embodiments, the correspondence is configured in the following manner: the number of SSB indexes configured per CGO is greater than 1; configuring SSB indexes based on DMRS groups; or indicating the number of SSB indexes by third information.

In combination with some embodiments of the second aspect, in some embodiments, the first information is a cell switch command sent by a serving cell to the terminal.

In combination with some embodiments of the second aspect, in some embodiments, the method further includes: sending a switch request message to the target cell, where the switch request message is used for requesting a cell switch; and in response to receiving a switch confirmation response sent by the target cell as a response to the switch request message, sending the first information to the terminal.

In a third aspect, embodiments of the disclosure provide a terminal. The method includes: a transceiver module configured to receive first information sent by a serving cell. The first information is used for triggering a user to switch to a target cell and used in activating a configured grant physical uplink shared channel (CG PUSCH) resource of the target cell, the CG PUSCH resource activated is used for the terminal to send third information to the target cell, and the third information is used for indicating that the terminal confirms switching to the target cell.

In a fourth aspect, embodiments of the disclosure provide a network device. The network device includes: a transceiver module configured to send first information. The first information is used for triggering a user to switch to a target cell and used in activating a configured grant physical uplink shared channel (CG PUSCH) resource of the target cell, the CG PUSCH resource activated is used for a terminal to send third information to the target cell, and the third information is used for indicating that the terminal confirms switching to the target cell.

In a fifth aspect, embodiments of the disclosure provide a terminal. The terminal includes one or more processors. The one or more processors are configured to perform the method according to the first aspect.

In a sixth aspect, embodiments of the disclosure provide a network device. The network device includes one or more processors. The one or more processors are configured to perform the method according to the second aspect.

In a seventh aspect, embodiments of the disclosure provide a communication system. The communication system includes a terminal and a network device. The terminal is configured to implement the method according to the first aspect, and the network device is configured to implement the method according to the second aspect.

In an eighth aspect, embodiments of the disclosure provide a storage medium having instructions stored thereon. When the instructions are executed on a communication device, the communication device is caused to perform the method according to any one of the first aspect or the second aspect.

It is understandable that the above terminal, access network device, first network element, second network element, core network device, communication system, storage medium, program product, computer program, chip or chip system are all used to perform the methods according to the embodiments of the disclosure. Therefore, for beneficial effects they achieve, reference may be made to the beneficial effects in the corresponding methods, which are not repeated here.

Embodiments of the disclosure provide a resource determination method, a terminal, a network device, and a communication system. In some embodiments, terms such as "resource determination method", "method for processing information", and "communication method" may be interchangeably used. Terms such as "resource determination apparatus", "apparatus for processing information", and "communication apparatus" may be interchangeably used. Terms such as "system for processing information" and "communication system" may be interchangeably used.

The embodiments of the disclosure are not exhaustive, but are only illustrations of some embodiments, and do not serve as specific limitations on the protection scope of the disclosure. In the absence of contradiction, each step in a certain embodiment may be implemented as an independent embodiment, and the steps may be combined arbitrarily. For example, a solution after removing some steps in a certain embodiment may also be implemented as an independent embodiment, and the order of steps in a certain embodiment may be arbitrarily exchanged. In addition, optional implementations in a certain embodiment may be arbitrarily combined. Furthermore, embodiments may be arbitrarily combined with each other. For example, some or all steps of different embodiments may be arbitrarily combined, and one embodiment may be arbitrarily combined with optional implementations of other embodiments.

In the embodiments of the disclosure, unless otherwise specified and there is no logical conflict, terms and/or descriptions among the embodiments are consistent and may be referred to each other. Technical features in different embodiments may be combined to form new embodiments according to their inherent logical relationships.

The terms used in the embodiments of the disclosure are only for the purpose of describing specific embodiments and are not intended to limit the disclosure.

In the embodiments of the disclosure, unless otherwise stated, elements expressed in singular form, such as "a", "an", "the", "said", "above", "the aforementioned", "this one", may mean "one and only one", "one or more", or "at least one", etc. For example, when using articles such as "a", "an", "the" in translation, the noun after the article may be understood as a singular expression or a plural expression.

In the embodiments of the disclosure, the term "multiple" means two or more.

In some embodiments, terms such as "at least one of", "one or more", "a plurality of", and "multiple" may be interchangeably used.

In some embodiments, descriptions such as "at least one of A and B", "A and/or B", "in one case, A, and in another case, B", "in response to one case, A, and in response to another case, B" may include the following technical solutions depending on the situation: in some embodiments, performingA(Ais performed regardless of B); in some embodiments, performing B (B is performed regardless of A); in some embodiments, selecting one from A and B to perform (A and B are selectively performed); or in some embodiments, performing A and B (both A and B are performed). The same applies when there are more branches such as A, B, C.

In some embodiments, descriptions such as "A or B" may include the following technical solutions depending on the situation: in some embodiments, performing A (A is performed regardless of B); in some embodiments, performing B (B is performed regardless of A); or in some embodiments, selecting one from A and B to perform (A and B are selectively performed). The same applies when there are more branches such as A, B, C.

Prefix words such as "first" and "second" in the embodiments of the disclosure are only used to distinguish different described objects and do not constitute a restriction on the position, order, priority, quantity, or content of the described objects. For the description of the described objects, reference may be made to the claims or the context description in the embodiments, and should not cause unnecessary restrictions due to the use of prefix words. For example, if a described objects is "field", the ordinal numbers before "field" in "first field" and "second field" do not restrict the position or order between "fields", and "first" and "second" do not restrict whether the "fields" they modify are in the same message, nor do they restrict the order of the "first field" and "second field". As another example, if the described object is "level", the ordinal numbers before "level" in "first level" and "second level" do not restrict the priority between "levels". As another example, the quantity of the described objects is not limited by the ordinal number, and it may be one or more. Taking "first apparatus" as an example, the number of "apparatuses" may be one or more. In addition, objects modified by different prefix words may be the same or different. For example, if the described object is "apparatus", then "first apparatus" and "second apparatus" may be the same apparatus or different apparatuses, and their types may be the same or different. As another example, if the described object is "information", then "first information" and "second information" may be the same information or different information, and their content may be the same or different.

In some embodiments, "including A", "containing A", "used for indicating A", "carrying A" may be interpreted as directly carrying A or indirectly indicating A.

In some embodiments, terms such as "in response to...", "in response to determining...", "in the case of...", "when...", "upon...", "if...", may be used interchangeably.

In some embodiments, terms such as "greater than", "greater than or equal to", "not fewer than", "more than", "more than or equal to", "not less than", "higher than", "higher than or equal to", "not lower than", and "above" may be used interchangeably. Terms such as "less than", "less than or equal to", "not greater than", "fewer than", "fewer than or equal to", "not more than", "lower than", "lower than or equal to", "not higher than", and "below" may be used interchangeably.

In some embodiments, the apparatus and device may be interpreted as physical or virtual, and their names are not limited to those recorded in the embodiments. In some cases, they may also be understood as "equipment", "device", "circuit", "network element", "node", "function", "unit", "component", "section", "system", "network", "chip", "chip system", "entity", "subject", or others.

In some embodiments, "network" may be interpreted as a device included in the network, such as an access network device, a core network device, or others.

In some embodiments, "access network device (AN device)" may also be referred to as "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", or others.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or others.

In some embodiments, obtaining data, information, or others may comply with the laws and regulations of the country where it is located.

In some embodiments, data, information, or others may be obtained after obtaining user consent.

Furthermore, each element, each row, or each column in tables of the embodiments of the disclosure may be implemented as an independent embodiment, and any combination of elements, rows, or columns may also be implemented as an independent embodiment.

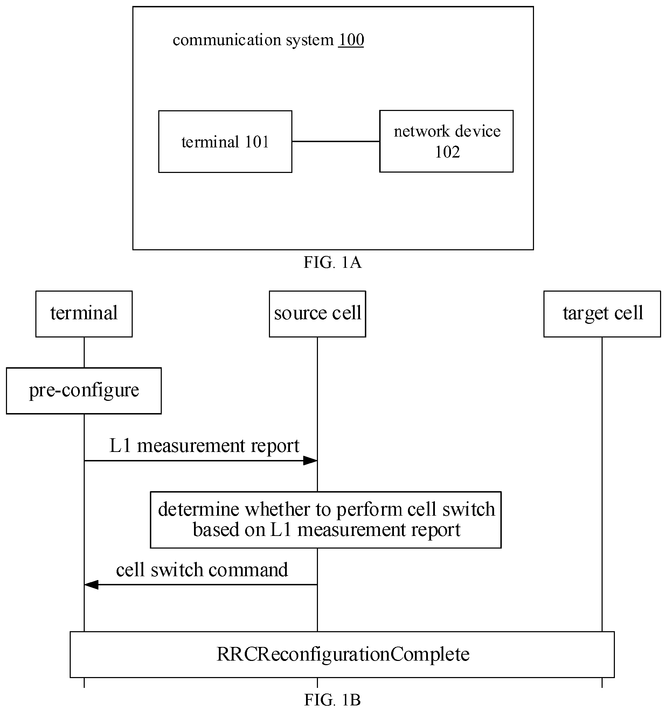

FIG. 1A is a schematic diagram illustrating a communication system according to an embodiment of the disclosure. As illustrated in FIG. 1A, the communication system 100 includes a terminal 101 and a network device 102.

In some embodiments, the terminal 101 includes at least one of, for example but is not limited to, a mobile phone, a wearable device, an Internet of Things device, a vehicle with communication capabilities, a smart vehicle, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home.

In some embodiments, the network device 102 is, for example, a node or device through that the terminal accesses a wireless network. The access network device may include at least one of, but is not limited to, an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, an access node in a Wi-Fi system, or others.

In some embodiments, the technical solutions of the disclosure may be applicable to an Open RAN architecture. In this case, the interfaces between access network devices or within an access network device involved in the embodiments of the disclosure may become internal interfaces of Open RAN, and the procedures and information interactions between these internal interfaces may be implemented by software or programs.

In some embodiments, the access network device may be composed of a central unit (CU) and a distributed unit (DU), where the CU may also be referred to as a control unit. Using the CU-DU structure, the protocol layers of the access network device may be split, with some protocol layer functions placed under centralized control of the CU, and the remaining part or all of the protocol layer functions distributed in the DU, with the CU centrally controlling the DU, but it is not limited thereto.

In some embodiments, the core network device may be a single device, including one or more network elements, or the core network device may be multiple devices or device groups, each including all or part of the above one or more network elements. The network elements may be virtual or physical. The core network includes, for example, at least one of an Evolved Packet Core (EPC), a 5G Core Network (5GCN), or a Next Generation Core (NGC).

It is understandable that the communication system according to the embodiments of the disclosure is for illustrating the technical solutions of the embodiments of the disclosure more clearly and does not constitute a limitation on the technical solutions according to the embodiments of the disclosure. Those of ordinary skill in the art will know that with the evolution of system architecture and the emergence of new business scenarios, the technical solutions according to the embodiments of the disclosure are equally applicable to similar technical problems.

The following embodiments of the disclosure may be applied to, but is not limited to, the communication system 100 illustrated in FIG. 1A, or part of the entities. The entities illustrated in FIG. 1A are examples. The communication system may include all or part of the entities in FIG. 1A, or may include other entities not illustrated in FIG. 1A. The number and form of each entity are arbitrary, and each entity may be physical or virtual. The connection relationships between the entities are examples. There may be no connection or a connection between the entities, and the connection may be in any manner, direct or indirect, wired or wireless.

The embodiments of the disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New-Radio Access Technology (RAT), New Radio (NR), New radio access (NX), Future generation radio access (FX), Global System for Mobile communications (GSM^{®}), CDMA2000, Ultra Mobile Broadband (UMB), IEEE 802.11 (Wi-Fi^{®}), IEEE 802.16 (WiMAX^{®}), IEEE 802.20, Ultra-WideBand (UWB), Bluetooth (Bluetooth^{®}), Public Land Mobile Network (PLMN) network, Device-to-Device (D2D) system, Machine to Machine (M2M) system, Internet of Things (IoT) system, Vehicle-to-Everything (V2X), other communication methods, next-generation systems based on them, or others. In addition, multiple systems may be combined (e.g., LTE or LTE-A combined with 5G, etc.).

FIG. 1B is a schematic diagram illustrating a RACH-less cell switch procedure according to an embodiment of the disclosure. As illustrated in FIG. 1B, a terminal pre-configures information. The terminal reports an L1 measurement report (also referred to as a beam measurement result) to a source cell (which is understandable as the serving cell before the cell switch). The source cell determines whether to perform a cell switch based on the L1 measurement report/beam measurement results. When it is determined to perform the cell switch, a target cell to be switched to is selected from candidate cells. The source cell sends a cell switch command to the terminal. After receiving the cell switch command, the terminal accesses the target cell without a random access channel procedure (RACH-less). Instead, the terminal sends information to the target cell to let the target cell determine that the terminal device accesses the target cell, or the terminal itself confirms accessing the target cell. For example, the terminal sends specific "first UL data" to the target cell to let the target cell determine user access, such as sending a Radio Resource Control Reconfiguration Complete (RRCReconfigurationComplete) message.

In the embodiments of the disclosure, the information used for triggering a user to switch to a target cell is referred to as first information.

In the embodiments of the disclosure, the information used for configuring resources of candidate cells is referred to as second information.

In the embodiments of the disclosure, the information used for the target cell to determine user access/for the terminal to confirm accessing the target cell is referred to as third information.

In an implementation of the embodiments of the disclosure, a resource for sending the third information is a Configured Grant Physical Uplink Shared Channel (CG PUSCH) resource of the target cell, and it is Type 1 CG PUSCH. For a Type 1 CG PUSCH resource, once configured, it takes effect, causing the resource to be continuously occupied. How to reduce the resource overhead for sending the access target message is a problem to be solved.

In view of this, the embodiments of the disclosure provide a CG PUSCH design for sending the third information to access a target cell, including introducing a new CG PUSCH type, or a design of a mapping relationship between CG PUSCH time-frequency resource configurations (or CG PUSCH occasions, CGOs) and different beams.

The CG PUSCH design for sending the third information to access the target cell according to the embodiments of the disclosure may also be understood as a resource determination method. Based on the resource determination method according to the embodiments of the disclosure, the third information is sent to the target cell to access the target cell and complete the cell switch.

In some embodiments, the resource determination method includes: introducing a new CG PUSCH type to determine a CG PUSCH resource.

Here, the new CG PUSCH type may be understood as configuring the CG PUSCH resource, followed by activating the CG PUSCH resource.

In an example, the new CG PUSCH type is determined based on first information. The first information is used for triggering a user to switch to a target cell and to activate the CG PUSCH resource of the target cell. In some embodiments, the CG PUSCH resource activated is used for the terminal to send the third information to the target cell.

In some embodiments, the resource determination method includes designing a mapping relationship between CGOs and beams to determine the CG PUSCH resource.

In some embodiments, designing the mapping relationship between CGOs and beams includes: CGOs corresponding to the CG PUSCH resource have a correspondence with the synchronization signal block (SSB) indices.

In an example, the correspondence satisfies that one CGO corresponds to a plurality of SSB indexes.

In some embodiments, the correspondence is configured in the following manner: the number of SSB indexes configured per CGO is greater than 1.

In some embodiments, the number of SSB indexes configured per CGO being greater than 1 is configured in at least one of the following manners: configuring SSB indexes based on DMRS groups; or indicating the number of SSB indexes by third information.

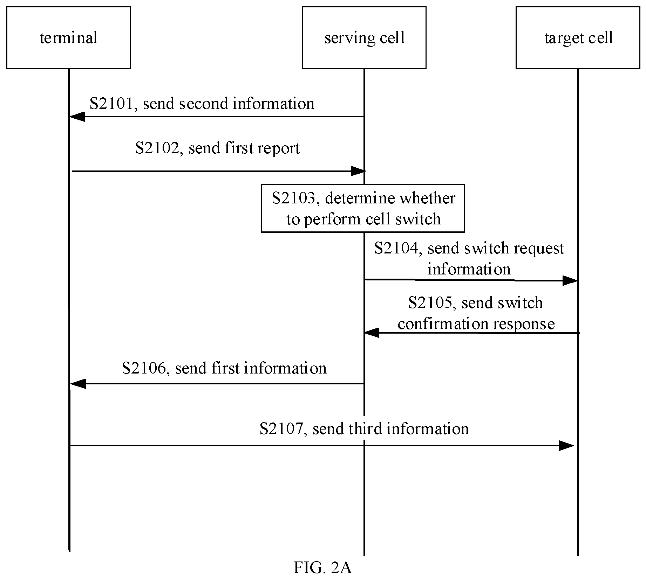

FIG. 2A is a schematic diagram illustrating an interface of a resource determination method according to an embodiment of the disclosure.

As illustrated in FIG. 2A, an embodiment of the disclosure relates to the resource determination method. The method includes the following.

At step S2101, the serving cell sends second information to the terminal.

It should be noted that "the serving cell sends the second information to the terminal" may be understood as that a network device (e.g., an access network device) to which the serving cell belongs sends the second information to the terminal.

In some embodiments, the terminal receives the second information.

It is understandable that "the terminal receives the second information sent by the serving cell" may be understood as that the terminal receives the second information sent by the network device (e.g., the access network device) to which the serving cell belongs.

In some embodiments, the second information is used for pre-configuring resource information of candidate cells. The number of candidate cells is one or more.

In some embodiments, the second information is used for pre-configuring Configured Grant Physical Uplink Shared Channel (CG PUSCH) resource information for one or more candidate cells. The CG PUSCH resource information of each candidate cell includes at least one of: a CG PUSCH time-frequency resource configuration (or CG PUSCH Occasion, CGO) of the candidate cell; a CG PUSCH period; or a time-domain offset.

In some embodiments, the second information is a Radio Resource Control (RRC) message sent by the serving cell to the terminal. Moreover, the second information is used for configuring CGOs of the candidate cells.

In some embodiments, the name of the second information is not limited, and it may be, for example, "pre-configuration information", "configuration information", or others.

In some embodiments, the second information includes RRC signaling, or other information used for configuring the CG PUSCH resource for the terminal.

In some embodiments, each CG PUSCH resource information in the second information includes a period and a time-domain offset of the CG PUSCH resource.

In some embodiments, the CG PUSCH time-frequency resource configurations are carried in pre-configuration information for the one or more candidate cells.

At step S2102, the terminal sends a first report.

In some embodiments, the terminal sends the first report to the serving cell.

For example, the serving cell may be understood as a network device (e.g., an access network device) to which the serving cell belongs.

It should be noted that "the terminal sends the first report to the serving cell" may be understood as that the terminal sends the first report to the network device (e.g., the access network device) to which the serving cell belongs.

In some embodiments, the serving cell receives the first report sent by the terminal.

It should be noted that "the serving cell receives the first report sent by the terminal" may be understood as that the network device (e.g., access network device) to which the serving cell belongs receives the first report sent by the terminal.

In some embodiments, the serving cell receives the first report.

In some embodiments, the serving cell receives the first report from the terminal.

In some embodiments, the first report is used for reporting one or more beam measurement results of one or more candidate cells.

In some embodiments, the first report is used for reporting beam measurement results of the serving cell and one or more candidate cells.

At step S2103, the serving cell determines whether to perform a cell switch.

In some embodiments, the serving cell determines whether to perform a cell switch based on the first report.

In some embodiments, the serving cell determines that the cell switch needs to be performed based on the first report and selects a target cell to switch to among the candidate cells.

At an optional step S2104, the serving cell sends a switch request message.

In some embodiments, the serving cell sends the switch request message to the target cell.

In some embodiments, the target cell receives the switch request message.

In some embodiments, the target cell receives the switch request message sent by the serving cell.

In some embodiments, the switch request message is used for informing the target cell that the terminal is going to switch to this cell.

In some embodiments, the name of the switch request message is not limited, and it may be, for example, "switch information", "request message", or others.

At an optional step S2105, the target cell sends a switch confirmation response.

In some embodiments, the target cell sends the switch confirmation response to the serving cell.

In some embodiments, the serving cell receives the switch confirmation response.

In some embodiments, the serving cell receives the switch confirmation response sent by the target cell.

In some embodiments, the target cell sends a response message to the serving cell as a response to the switch request message.

In some embodiments, the serving cell sends the first information to the terminal in response to receiving the switch confirmation response that is sent by the target cell as a response to the switch request message.

In some embodiments, the name of the switch confirmation response is not limited, and it may be, for example, "switch confirmation information", "confirmation message", or others.

At step S2106, the serving cell sends the first information.

It should be noted that "the serving cell sends the first information to the terminal" may be understood as that the network device (e.g., the access network device) to which the serving cell belongs sends the first information to the terminal.

It is understandable that "the terminal receives the first information sent by the serving cell" may be understood as that the terminal receives the first information sent by the network device (e.g., the access network device) to which the serving cell belongs.

In some embodiments, the terminal receives the first information.

In some embodiments, the first information is used for triggering a user to switch to a target cell and used in activating a CG PUSCH resource of the target cell.

In some embodiments, the activated CG PUSCH resource is used for the terminal to send the third information to the target cell.

In some embodiments, the third information is used for indicating to the target cell that the terminal switches to the target cell.

In some embodiments, the first information at least includes target cell information and indication information for indicating whether to activate the CG PUSCH resource of the target cell.

In some embodiments, the first information at least includes at least one of: target cell information; indication information for indicating whether to activate the CG PUSCH resource of the target cell; or information of a CG PUSCH time-frequency resource configuration.

In some embodiments, the CG PUSCH time-frequency resource configuration includes a first repetition number and a second repetition number. For example, the first repetition number indicates the number of repetitions of a CGO in a time domain. For example, the second repetition number indicates the number of repetitions of a CGO in a frequency domain.

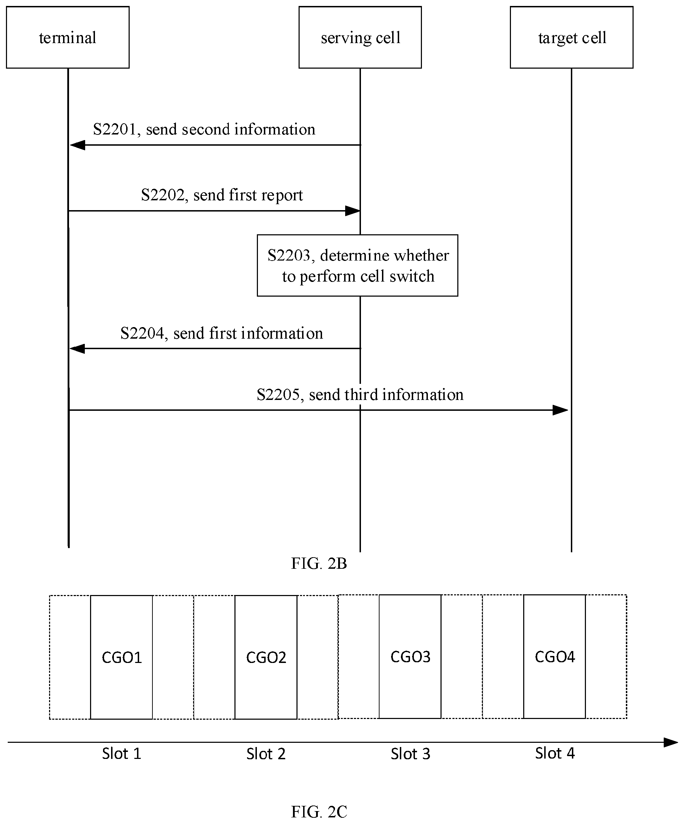

In some embodiments, the first repetition number may be understood as the repetition number of CGOs having the same time-frequency resource block size in the time domain. FIG. 2C is a schematic diagram illustrating a CGO time-frequency resource configuration with a configured repetition number in the time domain. As illustrated in FIG. 2C, the configured repetition number in the time domain is 4, and CGO1 configured in slot 1, CGO2 configured in slot 2, CGO3 configured in slot 3, and CGO4 configured in slot 4 have the same time-frequency resource block size.

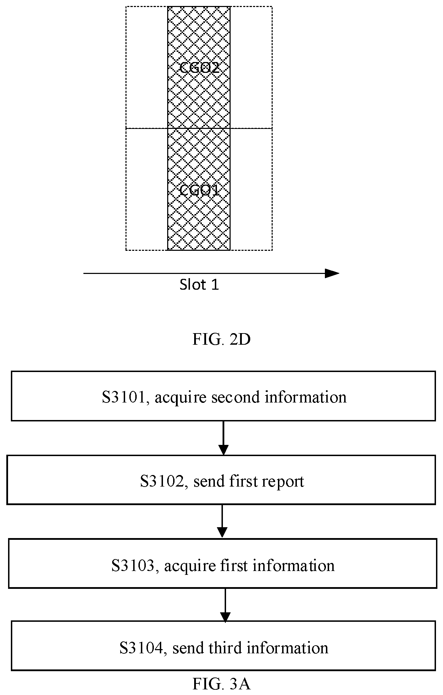

In some embodiments, the second repetition number may be understood as the repetition number of CGOs having the same time-frequency resource configuration, that is, the repetition number of CGOs having the same time-frequency resource block size in the frequency domain. FIG. 2D is a schematic diagram illustrating a CGO time-frequency resource configuration with a configured repetition number in the frequency domain. As illustrated in FIG. 2D, the configured repetition number in the frequency domain is 2, with CGO1 and CGO2 configured in different frequency-domain ranges of slot 1. CGO1 and CGO2 have the same time-frequency resource block size.

In some embodiments, the CG PUSCH time-frequency resource configuration includes time-frequency resource block information and the number of CGOs.

In some embodiments, the time-frequency resource block information includes time-domain resource block information and frequency-domain resource block information.

In some embodiments, the number of CGOs includes a first number and a second number.

For example, the time-domain resource block information is used for indicating a total time-domain resource occupied by the first number of CGOs within a first time-domain resource range. For example, the frequency-domain resource block information is used for indicating a total frequency-domain resource occupied by the second number of CGOs within a first frequency-domain resource range.

In some embodiments, the time-frequency resource block information includes time-domain resource block information, and the number of CGOs includes a first number. The time-domain resource block information is used for indicating the total time-domain resource occupied by the first number of CGOs within the first time-domain resource range, such as the number of occupied time units, e.g., the number of slots.

In some embodiments, the time-frequency resource block information includes frequency-domain resource block information, and the number of CGOs includes a second number. The frequency-domain resource block information is used for indicating the total frequency-domain resource occupied by the second number of CGOs within the first frequency-domain resource range.

In an example, the CG PUSCH resource configuration information includes CG PUSCH time-frequency resource information, a CG PUSCH period, and a time-domain offset.

Here, the CG PUSCH time-frequency resource information includes time-domain resource length information and frequency-domain resource length (also referred to as width) information of a resource block. The CG PUSCH period and the offset are used for determining an absolute time-domain position of the resource.

In an example, the time-domain resource length information includes a number of time units (such as a number of slots) and the number of CGOs per time unit (e.g., the number of CGO per slot), for determining the number of slots occupied by a time-domain resource and the number of CGOs in each slot. Here, the absolute time-domain position of the resource determined by the CG PUSCH period and the offset may be understood as a starting position. Starting from this starting position, CGOs are allocated within a specified resource block (e.g., the first time-domain resource range) based on the number of slots and the number of CGOs per slot.

In some embodiments, the number of CGOs per time unit may be an integer N or a fraction (such as 1/2) indicating that one CGO occupies two slots.

In some embodiments, the frequency-domain resource length information includes at least one of: [a physical resource block (PRB) offset to a frequency-domain resource starting position] or [a first frequency-domain resource range and the number of frequency-division multiplexed CGOs within the first frequency-domain resource].

In some embodiments, the first frequency-domain resource range may be a default value, such as an entire bandwidth part (BWP).

In some embodiments, the frequency-domain resource length information includes at least one of: a PRB offset of a frequency-domain resource; an allocated frequency-domain resource (may default to the entire BWP); a number of frequency-division multiplexed CGOs within the frequency-domain resource. For example, CGOs are allocated by adding the PRB offset to the starting position and by frequency-division multiplexing CGOs according to the number N within the entire BWP.

In some embodiments, CGOs corresponding to the CG PUSCH resource have a correspondence with synchronization signal block (SSB) indexes.

In some embodiments, the correspondence between CGOs and SSB indexes satisfies that one CGO corresponds to a plurality of SSB indexes. It is understandable that in mapping SSB indexes to CGOs, one CGO corresponds to multiple SSB indexes.

In some embodiments, the correspondence is configured in the following manner: the number of SSB indexes configured per CGO is greater than 1.

In some embodiments, the number of SSB indexes configured per CGO being greater than 1 is configured in at least one of the following manners: configuring SSB indexes based on DMRS groups; or indicating the number of SSB indexes by third information.

In an embodiment, configuring the SSB indexes based on the DMRS groups may be understood as mapping the SSB indexes to CGOs based on an order of indexes of the DMRS Code Division Multiplex (CDM) groups, of Demodulation Reference Signal (DMRS) port numbers, of DMRS sequence numbers, of CGO time-domain indexes, or of CGO frequency-domain indexes, thereby configuring the correspondence between the CGOs and the SSB indexes.

In an embodiment, indicating the number of SSB indexes by the third information may be understood as that the terminal notifies the network via the third information which specific SSB index(es) among the multiple SSB indexes corresponding to the CGO is/are selected.

In an embodiment, the first information is a cell switch command sent by the serving cell to the terminal.

At step S2107, the terminal sends the third information.

In some embodiments, the terminal sends the third information to the target cell.

In some embodiments, the target cell receives the third information sent by the terminal.

It should be noted that "the target cell receives the third information sent by the terminal to the target cell" may be understood as that the network device (e.g., the access network device) to which the target cell belongs receives the third information sent by the terminal.

In some embodiments, the third information is used for indicating to the target cell that the terminal will switch to the target cell.

In some embodiments, the third information is confirmation information.

In some embodiments, the third information is sent to the target cell when the terminal receives the first information.

In some embodiments, the third information is sent to the target cell when the serving cell instructs the terminal to perform a cell switch.

In some embodiments, the third information is used for indicating the SSB index(es).

In some embodiments, the name of the third information is not limited, and it may be, for example, "first uplink data", "confirmation message", "switch confirmation message", or others.

FIG. 2B is an example schematic diagram illustrating an interaction of a resource determination method according to an embodiment of the disclosure.

As illustrated in FIG. 2B, an embodiment of the disclosure relates to a resource determination method. The method includes the following.

At step S2201, the serving cell sends second information to the terminal.

For implementations of step S2201, reference may be made to step S2101 of FIG. 2A and other related parts in the embodiments involving FIG. 2A, which are not repeated here.

At step S2202, the terminal sends a first report.

For implementations of step S2202, reference may be made to step S2102 of FIG. 2A and other related parts in the embodiments involving FIG. 2A, which are not repeated here.

At step S2203, the serving cell determines whether to perform a cell switch.

For implementations of step S2203, reference may be made to step S2103 of FIG. 2A and other related parts in the embodiments involving FIG. 2A, which are not repeated here.

At step S2204, the serving cell sends the first information.

For implementations of step S2204, reference may be made to step S2106 of FIG. 2A and other related parts in the embodiments involving FIG. 2A, which are not repeated here.

At step S2205, the terminal sends the third information.

For implementations of step S2205, reference may be made to step S2107 of FIG. 2A and other related parts in the embodiments involving FIG. 2A, which are not repeated here.

The communication method according to embodiments of the disclosure may include at least one of steps S2201 to S2205. For example, step S2204 may be implemented as an independent embodiment, step S2201 may be implemented as an independent embodiment, steps S2204 + S2201 may be implemented as an independent embodiment, steps S2204 + S2205 may be implemented as an independent embodiment, steps S2201 + S2204 + S2205 may be implemented as an independent embodiment, but the disclosure is not limited thereto.

In some embodiments, steps S2202, S2203, S2204, S2205 are optional, and one or more of these steps may be omitted or replaced in different embodiments.

In some embodiments, steps S2201, S2203, S2204, S2205 are optional, and one or more of these steps may be omitted or replaced in different embodiments.

In some embodiments, steps S2201, S2202, S2204, S2205 are optional, and one or more of these steps may be omitted or replaced in different embodiments.

In some embodiments, steps S2201, S2202, S2203, S2205 are optional, and one or more of these steps may be omitted or replaced in different embodiments.

In some embodiments, steps S2201, S2202, S2203, S2204 are optional, and one or more of these steps may be omitted or replaced in different embodiments.

In the embodiments of the disclosure, step S2204 may be combined with steps S2101-S2105 of FIG. 2A, and step S2201 may be combined with steps S2106 and S2107 of FIG. 2A.

In some embodiments, names of information are not limited to those recorded in the embodiments. Terms such as "information", "message", "signal", "signaling", "report", "configuration", "indication", "instruction", "command", "channel", "parameter", "field", "symbol", "codebook", "codeword", "codepoint", "bit", "data", "program", and "chip" may be interchangeably used.

In some embodiments, terms such as "codebook", "codeword", and "precoding matrix" may be interchangeably used. For example, a codebook may be a collection of one or more codewords/precoding matrices.

In some embodiments, terms such as "uplink", "uplink link", and "physical uplink" may be interchangeably used. Terms such as "downlink", "downlink link", and "physical downlink" may be interchangeably used. Terms such as "side", "sidelink", "side communication", "sidelink communication", "direct-link", "direct link", "direct-link communication", and "direct link communication" may be interchangeably used.

In some embodiments, terms such as "downlink control information (DCI)", "downlink (DL) assignment", "DL DCI", "uplink (UL) grant", and "UL DCI" may be interchangeably used.

In some embodiments, terms such as "physical downlink shared channel (PDSCH)", and "DL data" may be interchangeably used. Terms such as "physical uplink shared channel (PUSCH)", and "UL data" may be interchangeably used.

In some embodiments, terms such as "radio", "wireless", "radio access network (RAN)", "access network (AN)", and "RAN-based" may be interchangeably used.

In some embodiments, terms such as "search space", "search space set", "search space configuration", "search space set configuration", "control resource set (CORESET)", and "CORESET configuration" may be interchangeably used.

In some embodiments, terms such as "synchronization signal (SS)", "synchronization signal block (SSB)", "reference signal (RS)", "pilot", and "pilot signal" may be interchangeably used.

In some embodiments, terms such as "time instant", "time point", "time", and "time position" may be interchangeably used. Terms such as "duration", "time period", "time window", "window", and "time" may be interchangeably used.

In some embodiments, terms such as "component carrier (CC)", "cell", "frequency carrier", and "carrier frequency" may be interchangeably used.

In some embodiments, terms such as "resource block (RB)", "physical resource block (PRB)", "sub-carrier group (SCG)", "resource element group (REG)", "PRB pair", "RB pair", "resource element (RE)", and "sub-carrier" may be interchangeably used.

In some embodiments, terms such as "wireless access scheme" and "waveform" may be interchangeably used.

In some embodiments, terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", and "panel" may be interchangeably used.

In some embodiments, terms such as "frame", "radio frame", "subframe", "slot", "sub-slot", "mini-slot", "symbol", "code element" and "transmission time interval (TTI)" may be interchangeably used.

In some embodiments, terms such as "acquire", "obtain", "get", "receive", "transmit", "bidirectional transmission", and "send and/or receive" may be interchangeably used, and may be interpreted as receiving from another entity, obtaining from a protocol, obtaining from a higher layer, processing by oneself, self-implementing, or the like.

In some embodiments, terms such as "send", "issue", "report", "deliver", "transmit", "bidirectional transmission", and "send and/or receive" may be interchangeably used.

In some embodiments, terms such as "certain", "preset", "predefined", "set", "indicated", "specific", "any", "first" may be interchangeably used. Terms such as "certain A", "preset A", "predefined A", "set A", "indicated A", "specific A", "any A", "first A" may be interpreted as A pre-specified in a protocol, or as A obtained through setting, configuration, or indication, or as a specific A, a certain A, any A, or first A, but the disclosure is not limited thereto.

In some embodiments, judgment or determination may be performed using a value represented by 1 bit (0 or 1), or using a Boolean value (true or false), or by comparing numerical values (e.g., comparison with a predetermined value), but the disclosure is not limited thereto.

In some embodiments, the term such as "not expected to receive" may be interpreted as not receiving in a time-domain resource and/or with a frequency-domain resource, or as not performing subsequent processing on received data. The term such as "not expected to send" may be interpreted as not sending, or as sending but not expecting the receiver to respond to the sent content.

The communication method according to the embodiments of the disclosure may include at least one of steps S2101 to S2107. For example, step S2106 may be implemented as an independent embodiment, step S2101 may be implemented as an independent embodiment, step S2101 + step S2106 may be implemented as an independent embodiment, step S2101 + step S2106 + step S2107 may be implemented as an independent embodiment, step S2101 + step S2102 + step S2103 + step S2106 + step S2107 may be implemented as an independent embodiment, but the disclosure is not limited thereto.

In some embodiments, steps S2101 and S2104 may be exchanged or performed simultaneously. Steps S2101 and S2102 may be exchanged or performed simultaneously. Steps S2103 and S2106 may be exchanged or performed simultaneously.

In some embodiments, steps S2102, S2103, S2104, S2105, S2106, S2107 are optional, and one or more of these steps may be omitted or replaced in different embodiments.

In some embodiments, steps S2101, S2103, S2104, S2105, S2106, S2107 are optional, and one or more of these steps may be omitted or replaced in different embodiments.

In some embodiments, steps S2101, S2102, S2104, S2105, S2106, S2107 are optional, and one or more of these steps may be omitted or replaced in different embodiments.

In some embodiments, steps S2101, S2102, S2103, S2105, S2106, S2107 are optional, and one or more of these steps may be omitted or replaced in different embodiments.

In some embodiments, steps S2101, S2102, S2103, S2104, S2106, S2107 are optional, and one or more of these steps may be omitted or replaced in different embodiments.

In some embodiments, steps S2101, S2102, S2103, S2104, S2105, S2107 are optional, and one or more of these steps may be omitted or replaced in different embodiments.

In some embodiments, steps S2101, S2102, S2103, S2104, S2105, S2106 are optional, and one or more of these steps may be omitted or replaced in different embodiments.

In some embodiments, reference may be made to other implementations recorded before or after the description corresponding to FIGS. 2A to 2D.

In some embodiments, FIG. 3A is a flowchart illustrating a resource determination method according to an embodiment of the disclosure. As illustrated in FIG. 3A, an embodiment of the disclosure relates to a resource determination method. The method includes the following.

At step S3101, second information is acquired.

For implementations of step S3101, reference may be made to the implementations of step S2101 of FIG. 2A and other related parts in the embodiments involving FIG. 2A, FIG. 2B, FIG. 2C, and FIG. 2D, which are not repeated here.

At step S3102, a first report is sent.

For implementations of step S3102, reference may be made to implementations of step S2102 of FIG. 2A and other related parts in the embodiments involving FIG. 2A, FIG. 2B, FIG. 2C, and FIG. 2D, which are not repeated here.

At step S3103, first information is acquired.

For implementations of step S3103, reference may be made to implementations of step S2106 of FIG. 2A and other related parts in the embodiments involving FIG. 2A, FIG. 2B, FIG. 2C, and FIG. 2D, which are not repeated here.

At step S3104, third information is sent.

For implementations of step S3104, reference may be made to implementations of step S2107 of FIG. 2A and other related parts in the embodiments involving FIG. 2A, FIG. 2B, FIG. 2C, and FIG. 2D, which are not repeated here.

The communication method according to the embodiments of the disclosure may include at least one of steps S3101 to S3104. For example, step S3103 may be implemented as an independent embodiment, step S3101 may be implemented as an independent embodiment, step S3101 + step S3103 may be implemented as an independent embodiment, step S3101 + step S3103 + step S3104 may be implemented as an independent embodiment, step S3101 + step S3102 + step S3103 + step S3104 may be implemented as an independent embodiment, but the disclosure is not limited thereto.

In some embodiments, steps S3101 and S3103 may be exchanged or performed simultaneously. Steps S3101 and S3102 may be exchanged or performed simultaneously.

In some embodiments, steps S3101, S3102, S3104 are optional, and one or more of these steps may be omitted or replaced in different embodiments.

In some embodiments, steps S3102, S3103, S3104 are optional, and one or more of these steps may be omitted or replaced in different embodiments.

In some embodiments, steps S3101, S3102, S3103 are optional, and one or more of these steps may be omitted or replaced in different embodiments.

In some embodiments, steps S3101, S3103, S3104 are optional, and one or more of these steps may be omitted or replaced in different embodiments.

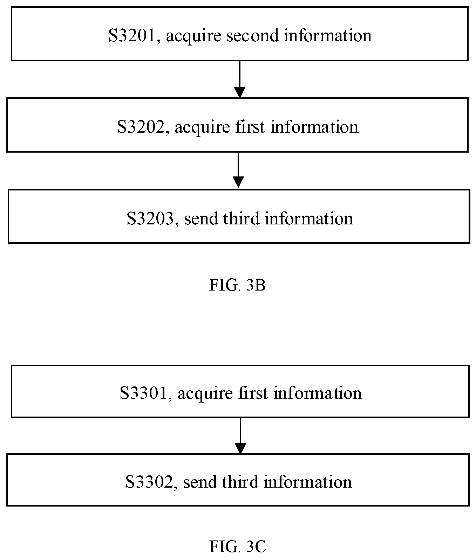

FIG. 3B is a flowchart illustrating a resource determination method according to an embodiment of the disclosure. As illustrated in FIG. 3B, an embodiment of the disclosure relates to a resource determination method. The method includes the following.

At step S3201, second information is acquired.

For implementations of step S3201, reference may be made to step S2101 of FIG. 2A, step S3101 of FIG. 3A, and other related parts in the embodiments involving FIG. 2A, FIG. 2B, FIG. 2C, FIG. 2D, and FIG. 3A, which are not repeated here.

At step S3202, first information is acquired.

For implementations of step S3202, reference may be made to step S2106 of FIG. 2A, step S3103 of FIG. 3A, and other related parts in the embodiments involving FIG. 2A, FIG. 2B, FIG. 2C, FIG. 2D, and FIG. 3A, which are not repeated here.

At step S3203, third information is sent.

For implementations of step S3203, reference may be made to step S2107 of FIG. 2A, step S3104 of FIG. 3A, and other related parts in the embodiments involving FIG. 2A, FIG. 2B, FIG. 2C, FIG. 2D, and FIG. 3A, which are not repeated here.

The communication method according to the embodiments of the disclosure may include at least one of steps S3201 to S3203. For example, step S3202 may be implemented as an independent embodiment, step S3203 may be implemented as an independent embodiment, steps S3202 + S3203 may be implemented as an independent embodiment, steps S3201 + S3202 + S3203 may be implemented as an independent embodiment, but the disclosure is not limited thereto.

In some embodiments, steps S3201 and S3202 are optional, and one or more of these steps may be omitted or replaced in different embodiments.

In some embodiments, steps S3201 and S3203 are optional, and one or more of these steps may be omitted or replaced in different embodiments.

In some embodiments, steps S3202 and S3203 are optional, and one or more of these steps may be omitted or replaced in different embodiments.

In the embodiments of the present disclosure, step S3202 may be combined with steps S3101-S3103 of FIG. 3A, and step S3203 may be combined with steps S3101-S3104 of FIG. 3A.

FIG. 3C is a flowchart illustrating a resource determination method according to an embodiment of the disclosure. As illustrated in FIG. 3C, an embodiment of the disclosure relates to a resource determination method. The method includes the following.

At step S3301, first information is acquired.

For implementations of step S3301, reference may be made to step S2106 of FIG. 2A, step S3103 of FIG. 3A, step S3202 of FIG. 3B, and other related parts in the embodiments involving FIG. 2A, FIG. 2B, FIG. 2C, FIG. 2D, FIG. 3A, and FIG. 3B, which are not repeated here.

At step S3302, third information is sent.

For implementations of step S3302 reference may be made to step S2107 of FIG. 2A, step S3104 of FIG. 3A, step S3203 of FIG. 3B, and other related parts in the embodiments involving FIG. 2A, FIG. 2B, FIG. 2C, FIG. 2D, FIG. 3A, and FIG. 3B, which are not repeated here.

In some embodiments, the terminal receives the first information sent by the serving cell, the first information is used for triggering the user to switch to the target cell and used in activating a CG PUSCH resource of the target cell. The activated CG PUSCH resource is used for the terminal to send the third information to the target cell, and the third information is used for indicating that the terminal confirms switching to the target cell.

In some embodiments, the second information sent by the serving cell is received. The second information is used for configuring CG PUSCH resource information of a plurality of candidate cells. The target cell is selected by the serving cell as a cell for a switch process based on beam measurement results of the plurality of candidate cells.

In some embodiments, the second information includes at least one of: a CG PUSCH time-frequency resource configuration of a candidate cell; a CG PUSCH period; or a time-domain offset.

In some embodiments, the first information at least includes target cell information and indication information for indicating whether to activate the CG PUSCH resource of the target cell.

In some embodiments, the second information includes a period and a time-domain offset of the CG PUSCH resource.

In some embodiments, the first information at least includes: target cell information; indication information for indicating whether to activate the CG PUSCH resource of the target cell; and information of a CG PUSCH time-frequency resource configuration.

In some embodiments, the CG PUSCH time-frequency resource configuration includes a first repetition number and a second repetition number. The first repetition number indicates a number of repetitions of a CGO in a time domain, and the second repetition number indicates a number of repetitions of a CGO in a frequency domain.

In some embodiments, the CG PUSCH time-frequency resource configuration includes time-frequency resource block information and the number of CGOs. The time-frequency resource block information includes time-domain resource block information and frequency-domain resource block information. The number of CGOs includes a first number and a second number. The time-domain resource block information is used for indicating a total time-domain resource occupied by the first number of CGOs within a first time-domain resource range. The frequency-domain resource block information is used for indicating a total frequency-domain resource occupied by the second number of CGOs within a first frequency-domain resource range.

In some embodiments, the CG PUSCH time-frequency resource configuration is carried in pre-configuration information of the candidate cell. The pre-configuration information includes a plurality of instances of CG PUSCH configuration information, and each of the plurality of instances of CG PUSCH configuration information includes a respective time-frequency resource configuration.

In some embodiments, CGOs corresponding to the CG PUSCH resource have a correspondence with SSB indexes. The correspondence satisfies that one CGO corresponds to a plurality of SSB indexes.

In some embodiments, the correspondence is configured in the following manner: the number of SSB indexes configured per CGO is greater than 1; configuring SSB indexes based on DMRS groups; or indicating the number of SSB indexes by third information.

In some embodiments, the first information is a cell switch command sent by the serving cell to the terminal.

In some embodiments, the method further includes: receiving fourth information sent by the target cell, in which the fourth information is used for deactivating the activated CG PUSCH resource.

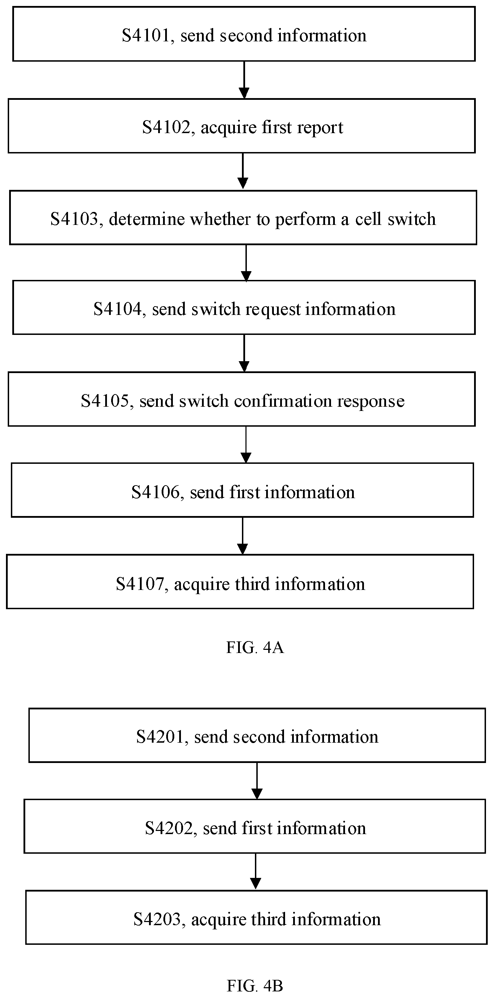

FIG. 4A is a flowchart illustrating a resource determination method according to an embodiment of the disclosure. As illustrated in FIG. 4A, an embodiment of the disclosure relates to a resource determination method. The method includes the following.

At step S4101, second information is sent.

For implementations of step S4101, reference may be made to implementations of step S2101 of FIG. 2A, step S3101 of FIG. 3A, and other related parts in the embodiments involving FIG. 2A, FIG. 2B, FIG. 2C, FIG. 2D, and FIG. 3A, which are not repeated here.

At step S4102, a first report is acquired.

For implementations of step S4102, reference may be made to implementations of step S2102 of FIG. 2A, step S3102 of FIG. 3A, and other related parts in the embodiments involving FIG. 2A, FIG. 2B, FIG. 2C, FIG. 2D, and FIG. 3A, which are not repeated here.

At step S4103, it is determined whether to perform a cell switch.

For implementations of step S4103, reference may be made to implementations of step S2103 of FIG. 2A and other related parts in the embodiments involving FIG. 2A, FIG. 2B, FIG. 2C, and FIG. 2D, which are not repeated here.

At an optional Step S4104, a switch request message is sent.

For implementations of step S4104, reference may be made to implementations of step S2104 of FIG. 2A and other related parts in the embodiments involving FIG. 2A, FIG. 2B, FIG. 2C, and FIG. 2D, which are not repeated here.

At optional Step S4105, a switch confirmation response is sent.

For implementations of step S4105, reference may be made to implementations of step S2105 of FIG. 2A and other related parts in the embodiments involving FIG. 2A, FIG. 2B, FIG. 2C, and FIG. 2D, which are not repeated here.

At step S4106, first information is sent.

For implementations of step S4106, reference may be made to implementations of step S2106 of FIG. 2A, step S3103 of FIG. 3A, and other related parts in the embodiments involving FIG. 2A, FIG. 2B, FIG. 2C, FIG. 2D, and FIG. 3A, which are not repeated here.

At step S4107, third information is acquired.

For implementations of step S4107, reference may be made to implementations of step S2107 of FIG. 2A, step S3104 of FIG. 3A, and other related parts in the embodiments involving FIG. 2A, FIG. 2B, FIG. 2C, FIG. 2D, and FIG. 3A, which are not repeated here.

The communication method according to the embodiments of the disclosure may include at least one of steps S4101 to S4107. For example, step S4106 may be implemented as an independent embodiment, step S4101 may be implemented as an independent embodiment, step S4101 + step S4106 may be implemented as an independent embodiment, step S4101 + step S4106 + step S4107 may be implemented as an independent embodiment, step S4101 + step S4102 + step S4106 + step S4107 may be implemented as an independent embodiment, but the disclosure is not limited thereto.

In some embodiments, steps S4102, S4103, S4104, S4105, S4106, S4107 are optional, and one or more of these steps may be omitted or replaced in different embodiments.

In some embodiments, steps S4101, S4103, S4104, S4105, S4106, S4107 are optional, and one or more of these steps may be omitted or replaced in different embodiments.

In some embodiments, steps S4101, S4102, S4104, S4105, S4106, S4107 are optional, and one or more of these steps may be omitted or replaced in different embodiments.

In some embodiments, steps S4101, S4102, S4103, S4105, S4106, S4107 are optional, and one or more of these steps may be omitted or replaced in different embodiments.

In some embodiments, steps S4101, S4102, S4103, S4104, S4106, S4107 are optional, and one or more of these steps may be omitted or replaced in different embodiments.

In some embodiments, steps S4101, S4102, S4103, S4104, S4105, S4107 are optional, and one or more of these steps may be omitted or replaced in different embodiments.

In some embodiments, steps S4101, S4102, S4103, S4104, S4105, S4106 are optional, and one or more of these steps may be omitted or replaced in different embodiments.

FIG. 4B is a flowchart illustrating a resource determination method according to an embodiment of the disclosure. As illustrated in FIG. 4B, an embodiment of the disclosure relates to a resource determination method. The method includes the following.

At step S4201, second information is sent.

For implementations of step S4201, reference may be made to step S2101 of FIG. 2A, step S3101 of FIG. 3A, step S3201 of FIG. 3B, step S4101 of FIG. 4A, and other related parts in the embodiments involving FIG. 2A, FIG. 2B, FIG. 2C, FIG. 2D, FIG. 3A, and FIG. 4A, which are not repeated here.

At step S4202, first information is sent.

For implementations of step S4202, reference may be made to step S2106 of FIG. 2A, step S3103 of FIG. 3A, step S3202 of FIG. 3B, step S4103 of FIG. 4A, and other related parts in the embodiments involving FIG. 2A, FIG. 2B, FIG. 2C, FIG. 2D, FIG. 3A, FIG. 3B, and FIG. 4A, which are not repeated here.

At step S4203, third information is acquired.

For implementations of step S4203, reference may be made to step S2107 of FIG. 2A, step S3104 of FIG. 3A, step S3203 of FIG. 3B, step S4106 of FIG. 4A, and other related parts in the embodiments involving FIG. 2A, FIG. 2B, FIG. 2C, FIG. 2D, FIG. 3A, FIG. 3B, and FIG. 4A, which are not repeated here.

The communication method according to the embodiments of the disclosure may include at least one of steps S4201 to S4203. For example, step S4202 may be implemented as an independent embodiment, and step S4201 may be implemented as an independent embodiment, but the disclosure is not limited thereto.

In some embodiments, steps S4201 and S4202 are optional, and one or more of these steps may be omitted or replaced in different embodiments.

In some embodiments, steps S4201 and S4203 are optional, and one or more of these steps may be omitted or replaced in different embodiments.

In some embodiments, steps S4202 and S4203 are optional, and one or more of these steps may be omitted or replaced in different embodiments.

In the embodiments of the present disclosure, step S4201 may be combined with steps S4102, S4106, S4107 of FIG. 4A, and step S4203 may be combined with steps S4101-S4103 of FIG. 4A.

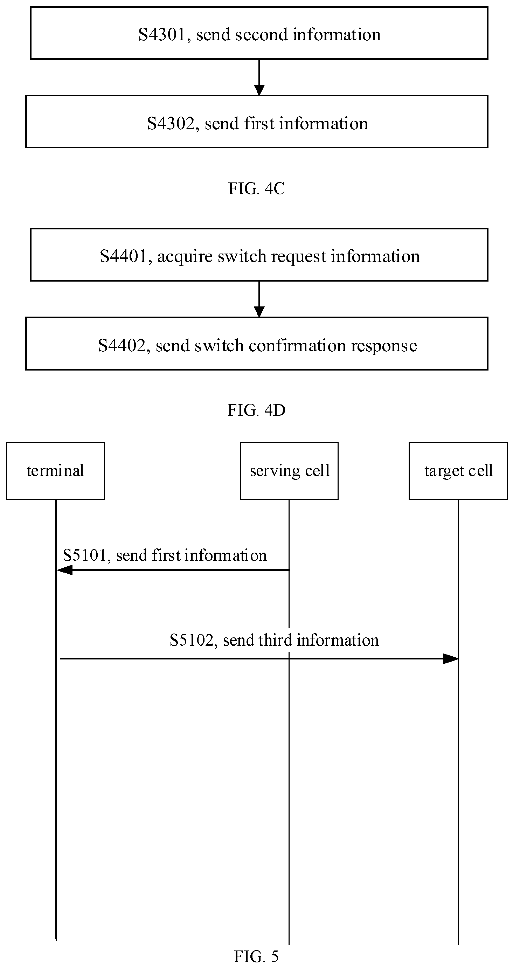

FIG. 4C is a flowchart illustrating a resource determination method according to an embodiment of the disclosure. As illustrated in FIG. 4C, an embodiment of the disclosure relates to a resource determination method. The method includes the following.

At step S4301, second information is sent.

For implementations of step S4301, reference may be made to step S2103 of FIG. 2A, step S3101 of FIG. 3A, step S3201 of FIG. 3B, step S4101 of FIG. 4A, step S4201 of FIG. 4B, and other related parts in the embodiments involving FIG. 2A, FIG. 2B, FIG. 2C, FIG. 2D, FIG. 3A, FIG. 3B, FIG. 4A, and FIG. 4B, which are not repeated here.

At step S4302, first information is sent.

For implementations of step S4302, reference may be made to step S2106 of FIG. 2A, step S3103 of FIG. 3A, step S3202 of FIG. 3B, step S3301 of FIG. 3C, step S4106 of FIG. 4A, step S4202 of FIG. 4B, and other related parts in the embodiments involving FIG. 2A, FIG. 2B, FIG. 2C, FIG. 2D, FIG. 4A, and FIG. 4B, which are not repeated here.

FIG. 4D is a flowchart illustrating a resource determination method according to an embodiment of the disclosure. As illustrated in FIG. 4D, an embodiment of the disclosure relates to a resource determination method. The method includes the following.

At step S4401, a switch request message is acquired.

For implementations of step S4401, reference may be made to step S2104 of FIG. 2A, step S4104 of FIG. 4A, and other related parts in the embodiments involving FIG. 2A, FIG. 2B, FIG. 2C, FIG. 2D, and FIG. 4A, which are not repeated here.

At step S4402, a switch confirmation response is sent.

For implementations of step S4402, reference may be made to step S2105 of FIG. 2A, step S4105 of FIG. 4A, and other related parts in the embodiments involving FIG. 2A, FIG. 2B, FIG. 2C, FIG. 2D, and FIG. 4A, which are not repeated here.

In some embodiments, the network device sends the first information, the first information is used for triggering the user to switch to the target cell and used in activating a CG PUSCH resource of the target cell. The activated CG PUSCH resource is used for the terminal to send the third information to the target cell, and the third information is used for indicating that the terminal confirms switching to the target cell.

In some embodiments, the method further includes sending second information. The second information is used for configuring CG PUSCH resource information of a plurality of candidate cells. The target cell is selected by the serving cell as a cell for a switch process based on beam measurement results of the plurality of candidate cells.

In some embodiments, the second information includes at least one: a CG PUSCH time-frequency resource configuration of a candidate cell; a CG PUSCH period; or a time-domain offset.

In some embodiments, the first information at least includes target cell information and indication information for indicating whether to activate the CG PUSCH resource of the target cell.

In some embodiments, the second information includes a period and a time-domain offset of the CG PUSCH resource.

In some embodiments, the first information at least includes: target cell information; indication information for indicating whether to activate the CG PUSCH resource of the target cell; and information of a CG PUSCH time-frequency resource configuration.

In some embodiments, the CG PUSCH time-frequency resource configuration includes a first repetition number and a second repetition number. The first repetition number indicates a number of repetitions of a CGO in a time domain, and the second repetition number indicates a number of repetitions of a CGO in a frequency domain.

In some embodiments, the CG PUSCH time-frequency resource configuration includes time-frequency resource block information and the number of CGOs. The time-frequency resource block information includes time-domain resource block information and frequency-domain resource block information. The number of CGOs includes a first number and a second number. The time-domain resource block information is used for indicating a total time-domain resource occupied by the first number of CGOs within a first time-domain resource range, and the frequency-domain resource block information is used for indicating a total frequency-domain resource occupied by the second number of CGOs within a first frequency-domain resource range.

In some embodiments, the CG PUSCH time-frequency resource configuration is carried in pre-configuration information of the plurality of candidate cell. The pre-configuration information includes a plurality of instances of CG PUSCH configuration information, each of the plurality of instances of CG PUSCH configuration information includes a respective time-frequency resource configuration.

In some embodiments, CGOs corresponding to the CG PUSCH resource have a correspondence with SSB indexes, and the correspondence satisfies that one CGO corresponds to a plurality of SSB indexes.

In some embodiments, the correspondence is configured in the following manner: the number of SSB indexes configured per CGO is greater than 1; configuring SSB indexes based on DMRS groups; or indicating the number of SSB indexes by third information.

In some embodiments, the first information is a cell switch command sent by the serving cell to the terminal.

In some embodiments, the method further includes sending a switch request message to the target cell. The switch request message is used for requesting a cell switch, and in response to receiving a switch confirmation response sent by the target cell as a response to the switch request message, sending the first information to the terminal.

FIG. 5 is a block diagram illustrating an interaction of a resource determination method according to an embodiment of the disclosure. As illustrated in FIG. 5, an embodiment of the disclosure relates to a resource determination method. The method includes the following.

At step S5101, the serving cell sends first information.

For implementations of step S5101, reference may be made to step S2106 of FIG. 2A, step S3103 of FIG. 3A, step S3202 of FIG. 3B, step S3301 of FIG. 3C, and other related parts in the embodiments involving FIG. 2A, FIG. 2B, FIG. 2C, FIG. 2D, FIG. 3A, FIG. 3B, and FIG. 3C, which are not repeated here.

At step S5102, the terminal sends third information.

For implementations of step S5102, reference may be made to step S2107 of FIG. 2A, step S3104 of FIG. 3A, step S3203 of FIG. 3B, step S3302 of FIG. 3C, step S4107 of FIG. 4A, step S4203 of FIG. 4B, step S4302 of FIG. 4C, and other related parts in the embodiments involving FIG. 2A, FIG. 2B, FIG. 2C, FIG. 2D, FIG. 3A, FIG. 3B, FIG. 3C, FIG. 4A, FIG. 4B, and FIG. 4C, which are not repeated here.

In some embodiments, the above method may include the methods of the embodiments of the communication system side, terminal side, network device side, etc., which are not repeated here.

In some embodiments, the above method may include the methods of the embodiments of the communication system side, terminal side, network device side, etc., which are not repeated here.

The embodiments also provide a resource determination method to reduce resource overhead required for sending a message to access a target cell during a switch process.

In some embodiments, the resource determination method includes the following: introducing a new CG PUSCH type, and designing a mapping relationship between CG PUSCH occasions (CGOs) and beams.

In some embodiments, introducing a new CG PUSCH type includes at least one of the following.
A) Configuring the CG PUSCH resource via RRC and then activating the resource via a cell switch command. After the user switches to the target cell, the target cell deactivates the CG PUSCH.
B) RRC configures information such as the CG PUSCH period of the candidate cells, and then the cell switch command includes the time-frequency resource configuration information of the target cell and simultaneously activates the CG PUSCH.

In some embodiments, for B), the manner of configuring the time-frequency resource in the cell switch command includes at least one of the following situations.
a) Including a time-domain resource allocation field and a frequency-domain resource allocation field in the switch signaling. The configuration may introduce a time-domain repetition number and a frequency-domain repetition number. For example, it also includes an indication of whether to perform intra-slot repetition.
b) Specifying a resource block in the switch signaling and specifying the number of CGOs.

For the time-domain resource, the Number of slots and the number of CGOs per slot are introduced to determine the number of slots occupied by the time-domain resource and the number of CGOs in each slot.

For frequency-domain resources, PRB offset of the frequency-domain resource; the allocated frequency-domain resource length (may default to the entire BWP); and the number of frequency-division multiplexed CGOs within the frequency-domain resource are introduced.

For example, for at least one of A) or B), to ensure that when the user performs the switch, the corresponding time-frequency resource of the target cell are not given to other users. Considering sending a request message to the target cell before the cell switch, the cell switch command is sent to the user after receiving a confirmation message.

In some embodiments, the design of the mapping relationship between CGOs and beams includes at least one of: configuring the number of SSBs per CGO to be a value greater than 1.

To make one CGO correspond to more SSB indexes, considering distinguishing different SSBs through more other resources. For example, a correspondence between DMRS groups and SSBs is introduced. For example, a specific SSB index is reported in the first UL data.

The embodiments of the disclosure also provide an apparatus for implementing any of the above methods. For example, an apparatus is provided, including units or modules for performing the steps executed by the terminal in any of the above methods. As another example, another apparatus is provided, including units or modules for performing the steps executed by the network device (e.g., access network device, core network function node, core network device, etc.) in any of the above methods.

It is understandable that the division of units or modules in the above apparatus is only a logical functional division. In actual implementation, they may be fully or partially integrated into one physical entity or physically separated. In addition, the units or modules in the apparatus may be implemented in the form of a processor calling software. For example, the apparatus includes a processor. The processor is connected to a memory. The memory stores instructions. The processor is configured to call the instructions stored in the memory to implement any of the above methods or implement the functions of the units or modules of the above apparatus. The processor is, for example, a general-purpose processor, such as a central processing unit (CPU) or a microprocessor. The memory is a memory within the apparatus or a memory outside the apparatus. For example, the units or modules in the apparatus may be implemented in the form of hardware circuits. Some or all of the functions of the units or modules may be realized by designing the hardware circuits. The above hardware circuit may be understood as one or more processors. For example, in an implementation, the above hardware circuit is an application-specific integrated circuit (ASIC), which realizes the functions of some or all of the above units or modules by designing the logical relationship of the circuit elements. As another example, in another implementation, the above hardware circuit may be realized by a programmable logic device (PLD), taking a field programmable gate array (FPGA) as an example, which may include a large number of logic gate circuits and configure the connection relationship between the logic gate circuits through a configuration file, thereby realizing the functions of some or all of the above units or modules. All units or modules of the above apparatus may be fully implemented in the form of a processor calling software, or fully implemented in the form of hardware circuits, or partially implemented in the form of a processor calling software, and the remaining part implemented in the form of hardware circuits.

In the embodiments of the disclosure, a processor is a circuit with signal processing capabilities. In an implementation, the processor may be a circuit with instruction reading and execution capabilities, such as a central processing unit (CPU), a microprocessor, a graphics processing unit (GPU) (which may be understood as a microprocessor), or a digital signal processor (DSP). In another implementation, the processor may implement certain functions through the logical relationship of hardware circuits, and the logical relationship of the hardware circuits is fixed or reconfigurable. For example, the processor is a hardware circuit implemented by an application-specific integrated circuit (ASIC) or a programmable logic device (PLD), such as an FPGA. In a reconfigurable hardware circuit, the process that the processor loads a configuration document to implement the hardware circuit configuration may be understood as the process that the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), or others.

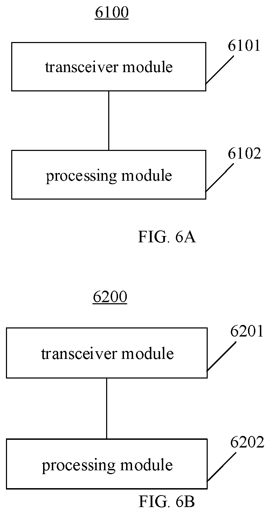

FIG. 6A is a block diagram illustrating a terminal according to an embodiment of the disclosure. As illustrated in FIG. 6A, a terminal 6100 may include at least one of a transceiver module 6101 or a processing module 6102. In some embodiments, the transceiver module is configured to receive first information sent by a serving cell. The first information is used for triggering a user to switch to a target cell and used in activating a CG PUSCH resource of the target cell. The activated CG PUSCH resource is used for the terminal to send third information to the target cell, and the third information is used for indicating that the terminal confirms switching to the target cell. For example, the transceiver module is configured to perform at least one of the communication steps (i.e., sending and/or receiving steps), including but not limited to steps S2101, S2102, S2104, S2105, S2106, S2107 performed by the terminal in any of the above methods, which are not repeated here. For example, the processing module is configured to perform at least one of the other steps performed by the terminal in any of the above methods, which are not repeated here.

FIG. 6B is a block diagram illustrating a network device according to an embodiment of the disclosure. As illustrated in FIG. 6B, a network device 6200 may include at least one of a transceiver module 6201 or a processing module 6202. In some embodiments, the transceiver module is configured to send first information. The first information is used for triggering a user to switch to a target cell and used in activating a CG PUSCH resource of the target cell. The activated CG PUSCH resource is used for a terminal to send third information to the target cell, and the third information is used for indicating that the terminal confirms switching to the target cell. For example, the transceiver module is configured to perform at least one of communication (i.e., sending and/or receiving) steps, including but not limited to steps S2101, S2102, S2104, S2105, S2106, S2107 performed by the terminal in any of the above methods, which are not repeated here. For example, the processing module is configured to perform at least one of the other steps, including but not limited to step S2103 performed by the terminal in any of the above methods, which is not repeated here.

In some embodiments, the transceiver module may include a sending module and/or a receiving module. The sending module and the receiving module may be separate or integrated. For example, the transceiver module may be replaced with a transceiver.

In some embodiments, the processing module may be one module or may include multiple sub-modules. For example, the multiple sub-modules respectively perform all or part of the steps required to be performed by the processing module. For example, the processing module may be replaced with a processor.

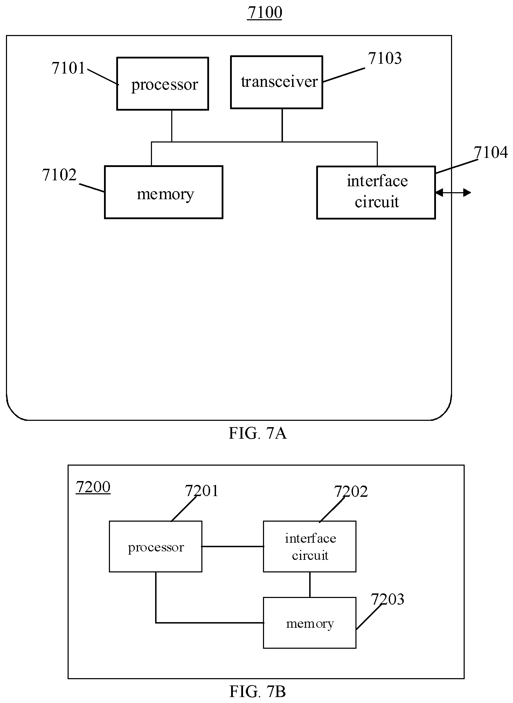

FIG. 7A is a block diagram illustrating a communication device 7100 according to an embodiment of the disclosure. The communication device 7100 may be a network device (e.g., an access network device, a core network device, or others), or a terminal (e.g., user equipment, or others), or a chip, chip system or processor that supports the network device in implementing any of the above methods, or a chip, chip system or processor that supports the terminal in implementing any of the above methods. The communication device 7100 may be configured to implement the methods described in the above method embodiments, and for details, reference may be made to description of the above method embodiments.

As illustrated in FIG. 7A, the communication device 7100 includes one or more processors 7101. The processor 7101 may be a general-purpose processor or a special-purpose processor, for example, a baseband processor or a central processing unit. The baseband processor may be configured to process communication protocols and communication data, and the central processing unit may be configured to control the communication device (e.g., base station, baseband chip, terminal device, terminal device chip, DU or CU,), execute programs, and process data of programs. The communication device 7100 is configured to perform any of the above methods.

In some embodiments, the communication device 7100 further includes one or more memories 7102 for storing instructions. For example, all or part of the memory 7102 may also be located outside the communication device 7100.

In some embodiments, the communication device 7100 further includes one or more transceivers 7103. When the communication device 7100 includes one or more transceivers 7103, the transceiver 7103 is configured to perform at least one of the communication (i.e., sending and/or receiving) steps, including but not limited to steps S2101, S2102, S2104, S2105, S2106, S2107 in the above methods, and the processor 7101 is configured to perform at least one of the other steps, including but not limited to step S2103.

In some embodiments, the transceiver may include a receiver and/or a transmitter, and the receiver and the transmitter may be separate or integrated. For example, terms such as "transceiver", "transceiver unit", "transceiver machine", and "transceiver circuit" may be interchangeably used. Terms such as "transmitter", "sending unit", "transmitter machine", and "sending circuit" may be interchangeably used. Terms such as "receiver", "receiving unit", "receiver machine", and "receiving circuit" may be interchangeably used.

In some embodiments, the communication device 7100 may include one or more interface circuits 7104. For example, the interface circuit 7104 is connected to the memory 7102. The interface circuit 7104 may be configured to receive signals from the memory 7102 or other devices and may be configured to send signals to the memory 7102 or other devices. For example, the interface circuit 7104 may be configured to read the instructions stored in the memory 7102 and send the instructions to the processor 7101.

In the description of the above embodiments, the communication device 7100 may be a network device or a terminal, but the scope of the communication device 7100 described in the disclosure is not limited thereto, and the structure of the communication device 7100 may not be limited by FIG. 7A. The communication device may be an independent device or may be part of a larger device. For example, the communication device may be: (1) an independent integrated circuit IC, or a chip, or a chip system or subsystem; (2) a set of one or more ICs, for example including a storage component for storing data and programs; (3) an ASIC, such as a modem; (4) a module that may be embedded in other devices; (5) a receiver, a terminal, an intelligent terminal, a cellular phone, a wireless device, a handset, a mobile unit, an in-vehicle device, a network device, a cloud device, an artificial intelligence device; (6) others.

FIG. 7B is a block diagram illustrating a chip 7200 according to an embodiment of the disclosure. For the case where the communication device 7100 may be a chip or a chip system, reference may be made to the block diagram of the chip 7200 illustrated in FIG. 7B, but the disclosure is not limited thereto.

The chip 7200 includes one or more processors 7201. The chip 7200 is configured to perform any of the above methods.

In some embodiments, the chip 7200 further includes one or more interface circuits 7202. For example, terms such as "interface circuit", "interface", and "transceiver pin" may be used interchangeably. In some embodiments, the chip 7200 further includes one or more memories 7203 for storing data. For example, all or part of the memory 7203 may be located outside the chip 7200. For example, the interface circuit 7202 is connected to the memory 7203. The interface circuit 7202 may be configured to receive data from the memory 7203 or other devices, and the interface circuit 7202 may be configured to send data to the memory 7203 or other devices. For example, the interface circuit 7202 may read the data stored in the memory 7203 and send the data to the processor 7201.

In some embodiments, the interface circuit 7202 is configured to perform at least one of communication (i.e., sending and/or receiving) steps, including but not limited to steps S2101, S2102, S2104, S2105, S2106, S2107 in the above methods. The interface circuit 7202 performing at least one of the communication (i.e., sending and/or receiving) steps in the above methods means that, for example, the interface circuit 7202 performs data exchange between the processor 7201, the chip 7200, the memory 7203, or a transceiver device. In some embodiments, the processor 7201 is configured to perform at least one of the other steps, including but not limited to step S2103.

The modules and/or devices described in the various embodiments, such as virtual devices, physical devices, or chips, may be arbitrarily combined or separated according to circumstances. For example, some or all of the steps may also be performed by multiple modules and/or devices in cooperation, which is not limited here.

The disclosure also provides a storage medium having instructions stored thereon. When the instructions are executed on the communication device 7100, the communication device 7100 is caused to perform any of the above methods. For example, the storage medium is an electronic storage medium. For example, the storage medium is, but is not limited to, a computer-readable storage medium, or may also be a storage medium readable by other devices. For example, the storage medium may be, but not limited to, a non-transitory storage medium, or may also be a transitory storage medium.

The disclosure also provides a program product. When the program produce is executed by the communication device 7100, the communication device 7100 is caused to perform any of the above methods. For example, the program product is a computer program product.

The disclosure also provides a computer program. When the computer program is executed on a computer, the computer is caused to perform any of the above methods.

## Claims

1. A resource determination method, comprising:
introducing a new configured grant physical uplink shared channel (CG PUSCH) type to determine a CG PUSCH resource; or
designing a mapping relationship between configured grant physical uplink shared channel occasions (CGOs) and beams to determine a CG PUSCH resource.

2. The method of claim 1, wherein introducing a new configured grant physical uplink shared channel (CG PUSCH) type comprises:
receiving, by a terminal, first information sent by a serving cell, wherein the first information represents the new CG PUSCH type, is used for triggering a user to switch to a target cell, and is used in activating a CG PUSCH resource of the target cell, the CG PUSCH resource activated is used for the terminal to send third information to the target cell, and the third information is used for indicating that the terminal confirms switching to the target cell.

3. The method of claim 2, further comprising:
receiving second information sent by the serving cell, wherein the second information is used for configuring CG PUSCH resource information for a plurality of candidate cells,
wherein the target cell is a cell selected by the serving cell as a cell for a switch process based on beam measurement results of the plurality of candidate cells.

4. The method of claim 3, wherein the second information comprises at least one of:
a CG PUSCH time-frequency resource configuration of a candidate cell;
a CG PUSCH period; or
a time-domain offset.

5. The method of claim 4, wherein the first information at least comprises target cell information and indication information for indicating whether to activate the CG PUSCH resource of the target cell.

6. The method of claim 3, wherein the second information comprises a period and a time-domain offset of a CG PUSCH resource.

7. The method of claim 6, wherein the first information at least comprises:
target cell information;
indication information for indicating whether to activate the CG PUSCH resource of the target cell; and
information of a CG PUSCH time-frequency resource configuration.

8. The method of claim 4 or 7, wherein the CG PUSCH time-frequency resource configuration comprises a first repetition number and a second repetition number, and
the first repetition number indicates a repetition number of a CGO in a time domain, and the second repetition number indicates a repetition number of a CGO in a frequency domain.

9. The method of claim 4 or 7, wherein the CG PUSCH time-frequency resource configuration comprises time-frequency resource block information and a number of CGOs,
wherein the time-frequency resource block information comprises time-domain resource block information and frequency-domain resource block information, the number of CGOs comprises a first number and a second number, the time-domain resource block information indicates a total time-domain resource occupied by the first number of CGOs within a first time-domain resource range, and the frequency-domain resource block information indicates a total frequency-domain resource occupied by the second number of CGOs within a first frequency-domain resource range.

10. The method of claim 4, wherein the CG PUSCH time-frequency resource configuration is carried in pre-configuration information of the plurality of candidate cells, and
the pre-configuration information comprises a plurality of instances of CG PUSCH configuration information, and each of the plurality of instances of CG PUSCH configuration information comprises a respective time-frequency resource configuration.

11. The method of claim 1, wherein the mapping relationship between CGOs and beams comprises: a correspondence between CGOs corresponding to the CG PUSCH resource and Synchronization Signal Block (SSB) indices, and
the correspondence satisfies that one CGO corresponds to a plurality of SSB indices.

12. The method of claim 11, wherein the correspondence is configured in the following manner:
the number of SSB indices configured per CGO is greater than 1.

13. The method of claim 12, wherein the number of SSB indices configured per CGO being greater than 1 is configured in at least one of the following manners:
configuring SSB indices based on DMRS groups; or
indicating the number of SSB indices by third information.

14. The method of claim 2, wherein the first information is a cell switch command sent by the serving cell to the terminal.

15. The method of any one of claims 1 to 14, further comprising:
receiving fourth information sent by the target cell, wherein the fourth information is used for deactivating the CG PUSCH resource activated.

16. A resource determination method, comprising:
configuring a new configured grant physical uplink shared channel (CG PUSCH) type, wherein the CG PUSCH type is used in determining a CG PUSCH resource; or
configuring a mapping relationship between configured grant physical uplink shared channel occasions (CGOs) and beams, wherein the mapping relationship is used in determining a CG PUSCH resource.

17. The method of claim 16, wherein configuring a new configured grant physical uplink shared channel (CG PUSCH) type comprises:
sending, by a network device, first information, wherein the first information is used for triggering a user to switch to a target cell and used in activating a CG PUSCH resource of the target cell, the CG PUSCH resource activated is used for a terminal to send third information to the target cell, and the third information is used for indicating that the terminal confirms switching to the target cell.

18. The method of claim 17, further comprising:
sending second information, wherein the second information is used for configuring CG PUSCH resource information for a plurality of candidate cells,
wherein the target cell is selected by a serving cell as a cell for a switch process based on beam measurement results of the plurality of candidate cells.

19. The method of claim 18, wherein the second information comprises at least one of:
a CG PUSCH time-frequency resource configuration of a candidate cell;
a CG PUSCH period; or
a time-domain offset.

20. The method of claim 19, wherein the first information at least comprises target cell information and indication information for indicating whether to activate the CG PUSCH resource of the target cell.

21. The method of claim 18, wherein the second information comprises a period and a time-domain offset of a CG PUSCH resource.

22. The method of claim 19, wherein the first information at least comprises:
target cell information;
indication information for indicating whether to activate the CG PUSCH resource of the target cell; and
information of a CG PUSCH time-frequency resource configuration.

23. The method of claim 19 or 22, wherein the CG PUSCH time-frequency resource configuration comprises a first repetition number and a second repetition number,
the first repetition number indicates a repetition number of a CGO in a time domain, and the second repetition number indicates a repetition number of a CGO in a frequency domain.

24. The method of claim 19 or 22, wherein the CG PUSCH time-frequency resource configuration comprises time-frequency resource block information and a number of CGOs,
wherein the time-frequency resource block information comprises time-domain resource block information and frequency-domain resource block information, the number of CGOs comprises a first number and a second number, the time-domain resource block information indicates a total time-domain resource occupied by the first number of CGOs within a first time-domain resource range, and the frequency-domain resource block information indicates a total frequency-domain resource occupied by the second number of CGOs within a first frequency-domain resource range.

25. The method of claim 19, wherein the CG PUSCH time-frequency resource configuration is carried in pre-configuration information of the plurality of candidate cells, and
the pre-configuration information comprises a plurality of instances of CG PUSCH configuration information, and each of the plurality of instances of CG PUSCH configuration information comprises a respective time-frequency resource configuration.

26. The method of any one of claims 16 to 25, wherein the mapping relationship between CGOs and beams comprises: a correspondence between CGOs corresponding to the CG PUSCH resource and Synchronization Signal Block (SSB) indices, and
the correspondence satisfies that one CGO corresponds to a plurality of SSB indices.

27. The method of claim 26, wherein the correspondence is configured in the following manner:
the number of SSB indices configured per CGO is greater than 1.

28. The method of claim 27, wherein the number of SSB indices configured per CGO being greater than 1 is configured in at least one of the following manners:
configuring SSB indices based on DMRS groups; or
indicating the number of SSB indices by third information.

29. The method of claim 17, wherein the first information is a cell switch command sent by a serving cell to the terminal.

30. The method of any one of claims 16 to 29, further comprising:
sending a switch request information to the target cell, wherein the switch request information is used for requesting a cell switch; and
sending the first information to the terminal in response to receiving a switch confirmation response that is sent by the target cell as a response to the switch request information.

31. A terminal, comprising:
a transceiver module, configured to receive first information sent by a serving cell, wherein the first information is used for triggering a user to switch to a target cell and used in activating a configured grant physical uplink shared channel (CG PUSCH) resource of the target cell, the CG PUSCH resource activated is used for the terminal to send third information to the target cell, and the third information is used for indicating that the terminal confirms switching to the target cell.

32. A network device, comprising:
a transceiver module, configured to send first information, wherein the first information is used for triggering a user to switch to a target cell and used in activating a configured grant physical uplink shared channel (CG PUSCH) resource of the target cell, the CG PUSCH resource activated is used for a terminal to send third information to the target cell, and the third information is used for indicating that the terminal confirms switching to the target cell.

33. A terminal, comprising:
one or more processors,
wherein the one or more processors are configured to perform the method of any one of claims 1 to 15.

34. A network device, comprising:
one or more processors,
wherein the one or more processors are configured to perform the method of any one of claims 16 to 30.

35. A communication system, comprising a terminal and a network device, wherein the terminal is configured to perform the method of any one of claims 1 to 15, and the network device is configured to perform the method of any one of claims 16 to 30.

36. A storage medium, having instructions stored thereon, wherein when the instructions are executed on a communication device, the communication device is caused to perform the method of any one of claims 1 to 15 or claims 16 to 30.
